# EUROPEAN PATENT APPLICATION

(11) **EP 1 855 468 A2**
(43) Date of publication of application: **14.11.2007**
(21) Application number: 07008011.4
(22) Date of filing: 19.04.2007
(51) Int. Cl.: H04N 5/44, H04N 5/46

(54) **Image detection device, image processing apparatus, image detection method, method of reducing burn-in of display device, and image detection program**

(30) Priority: 11.05.2006 JP 2006132605
(71) Applicant: Pioneer Corporation, Tokyo 153-8654 (JP)
(72) Inventor: Kato, Akira, Tokyo 143-8564 (JP); Ochiai, Kazunori, Tokyo 143-8564 (JP); Urakami, Hiroyuki, Tokyo 143-8564 (JP); Oki, Takahiro, Tokyo 143-8564 (JP)
(74) Representative: Grünecker, Kinkeldey, Stockmair & Schwanhäusser Anwaltssozietät

(57) **Abstract**

An object of the present invention is to accurately detect a blank area (side mask) appearing outside an image area when an image has a different aspect ratio against a display screen. A boundary between a side mask and an image area is detected with a change of a luminance level of a plurality of scan lines of an image. The side mask is detected with a logical addition of detected results of an active detection unit 3a and a level detection unit 3b. The level detection units 3b sets previously a plurality of judge areas and detects the side mask when the judge areas set in the side mask do not change the mean luminance levels for a prescribed period of time and the judge areas set in the image area change the mean luminance levels.

## Description

### BACKGROUND OF THE INVENTION

### 1. Field of the Invention

The present invention relates to an image detection device, an image processing apparatus, an image detection method, a method of reducing a burn-in of a display device, and an image detection program, for detecting a blank area appearing outside an image area when the image with a different aspect ratio about a display screen is displayed.

### 2. Description of Related Art

When a conventional television (TV) receiver receives an image of a different aspect ratio, the TV receiver shows a prescribed stripe area (mask) of dark color or a certain pattern in a blank area of the image on a screen. When the stripe area (mask) is subject to the same color or same pattern for a long time, a burn-in occurs on the screen of the stripe area and becomes visible with eyes of users, the burn-in results to a problem of quality of the TV receiver. JP-2003-219320-A discloses a method of reducing the burn-in of a display device. In a display apparatus of JP-2003-219320-A, a black detection device detects whether or not black stripes exists in upper and lower sides or left and right sides of the screen. When the black stripes detected, the black stripes are replaced with an alternative color generated by a generator of a mask signal level.

The image display apparatus of JP-2003-219320-A only detects the black color mask area so that the apparatus is not able to detect the mask area such as a decorative pattern other than black color in digital broadcasting. The conventional apparatus can not reduce the burn-in of the mask area other than black color.

### SUMMARY OF THE INVENTION

An object of the present invention is to provide an image detection device, an image processing apparatus, an image detection method, a method of reducing burn-in of a display device, and an image detection program, for detecting a blank area (area positioned outside an image area) of the image, which has the image area and the blank area, when the image of an aspect ratio is displayed on a display screen of a different aspect ratio.

According to a first aspect of the present invention, an image detection device for detecting a blank area of an inputted image having an image area and the blank area, includes a first detection unit for detecting the blank area based on a change of a luminance level of an arbitrary scan direction of the image; a second detection unit for previously setting a plurality of judges areas in the image and detecting the blank area based on a judgment whether or not the respective judge areas are moving images or still images; and a judging unit for judging whether or not the blank area is detected based on detected results of the first detection unit and the second detection unit.

According to a second aspect of the present invention, a method of detecting a blank area of an inputted image having an image area and the blank area positioned outside the image area, comprising the steps of: detecting the blank area based on a change of a luminance level in an arbitrary scan direction of the image; setting previously a plurality of judge areas and detecting the blank area based on a judgment whether or not the respective judge areas are moving images or still images; and judging whether or not the blank area is detected based on the detected results of both the change of the luminance level of the scan direction and the judgment of the respective judge areas being the moving images or still images.

According to a third aspect of the present invention, a method of reducing a burn-in of a display device displaying an image having a blank area and an image area in respective prescribed regions, includes the steps of: judging the image positioned in the blank area as the blank area when a difference between a luminance level of the image positioned in the blank area and the image positioned in the image area is at least a prescribed value, the image positioned in the blank area is a still image, and the image positioned in the image area is a moving image; and providing the inputted image with a process of reducing the burn-in based on the judgment.

According to a fourth aspect of the present invention, an image detection program achieved by a computer for detecting a blank area of an inputted image having an image area and the blank area positioned outside the image area, comprising the programs of: a first detection program for detecting the blank area based on a change of a luminance level in an arbitrary scan direction of the image; a second detection program for setting previously a plurality of judge areas and detecting the blank area based on a judgment whether or not the respective judge areas are moving images or still images; and a judge program for judging whether or not the blank area is detected based on detected results of the first detection program and the second detection program.

### BRIEF DESCRIPTION OF THE DRAWINGS

FIG. 1 is a block diagram of a first embodiment of an image processing apparatus of the present invention;
FIG. 2A illustrates an operation of an active detection unit of the image processing apparatus of FIG. 1;
FIG. 2B illustrates an operation of an active detection unit of the image processing apparatus of FIG. 1;
FIG. 3 is a flowchart of the operation of the active detection unit of the image processing apparatus of FIG. 1;
FIG. 4 illustrates an operation of an error detection protection of the active detection unit of FIG. 1;
FIG. 5 illustrates the operation of the error detection protection of the active detection unit of FIG. 1;
FIG. 6 illustrates an operation of a level detection unit of the image processing apparatus of FIG. 1;
FIG. 7 is a flowchart of the operation of the level detection unit of FIG. 1;
FIG. 8 is a block diagram of a second embodiment of an image processing apparatus of the present invention;
FIG. 9 is a flowchart of the operation of the level detection unit of FIG. 8; and.

FIG. 10 is a flowchart of an image processing program according to a third embodiment of the present invention.

### DETAILED DESCRIPTION OF THE PREFERRED EMBODIMENTS

A first embodiment of an image detection device of the present invention is explained below. An image detection device for detecting a blank area of an inputted image having an image area and the blank area, includes: a first detection unit for detecting the blank area based on a change of a luminance level of an arbitrary scan direction of the image; a second detection unit for previously setting a plurality of judges areas in the image and detecting the blank area based on a judgment whether or not the respective judge areas are moving images or still images; and a judging unit for judging whether or not the blank area is detected based on detected results of the first detection unit and the second detection unit. The judgment with the combination of the detected results of the first and second detection units can accurately detect the blank area other than black color of a variety of images.

Preferably, the first detection unit detects the blank area by detecting a boundary between the image area and the blank area, the boundary being defined by a pixel where the luminance levels of a plurality of lines in the arbitrary scan direction change by at least a prescribed value previously set. When the difference of the luminance between the image area and the blank area is at least the prescribed value, the blank area is assuredly detected.

Preferably, the first detection unit has a boundary memory unit for storing a position of the previously detected boundary and detects the blank area when the difference between the position of the previously detected boundary and the position of a currently detected boundary is less than a first tolerance previously set. The position of the boundary between the image area and the blank area hardly changes. The difference between the fields of less than the first tolerance improves the accuracy of the first detection unit.

Preferably, the first detection unit previously sets the plurality of the lines separated to each other for detecting the boundary. The boundary between the image area and the blank area is perpendicular to the scan direction. An error judge to an area of low luminance (not blank area) is reduced.

Preferably, the second detection unit has a signal level memory unit for storing signal levels of the plurality of judge areas previously set for a prescribed period of time and detects the blank area when the signal levels of the plurality of the previously set judge areas of the blank area do not change for the prescribed period of time and the signal levels of the previously set judge areas of the image area change. The blank area does not change the mean luminance level with time but the image area changes the mean luminance level with time when the image changed. The blank area can thus accurately be detected.

Preferably, the second detection unit previously sets the plurality of the judge areas in the each blank area and the image area, respectively. The small division of the areas improves the accuracy of detection of the second detection unit.

An image processing apparatus includes the image detection device and a composing device for composing the inputted image based on a detected result of the image detection device. The composing device thereby reduces the burn-in in the blank area detected with the image detection device.

A method of detecting a blank area of an inputted image having an image area and the blank area positioned outside the image area, includes the steps of: detecting the blank area based on a change of a luminance level in an arbitrary scan direction of the image; setting previously a plurality of judge areas and detecting the blank area based on a judgment whether or not the respective judge areas are moving images or still images; and judging whether or not the blank area is detected based on the detected results of both the change of the luminance level of the scan direction and the judgment of the respective judge areas being the moving images or still images. Thereby, a variety of images having the blank area other than black color can be accurately detected.

A method of reducing a burn-in of a display device displaying an image having a blank area and an image area in respective prescribed regions, includes the steps of: judging the image positioned in the blank area to be the blank area when a difference between a luminance level of the image positioned in the blank area and the image positioned in the image area is at least a prescribed value, the image positioned in the blank area is a still image, and the image positioned in the image area is a moving image; and providing the inputted image with a process of reducing the burn-in based on the judgment. The process of reducing the burn-in is achieved based on the combination of the detected results of the blank area with the plurality of the different detection units. Thereby, the error judgment of the blank area is reduced so that the burn-in is assuredly reduced.

An image detection program achieved by a computer for detecting a blank area of an inputted image having an image area and the blank area positioned outside the image area, includes the programs of: a first detection program for detecting the blank area based on a change of a luminance level in an arbitrary scan direction of the image; a second detection program for setting previously a plurality of judge areas and detecting the blank area based on a judgment whether or not the respective judge areas are moving images or still images; and a judge program for judging whether or not the blank area is detected based on detected results of the first detection program and the second detection program. The blank area is thus judged with the combination of the detected results of the first and second detection units so that a variety of images having the blank area other than black color can be accurately detected.

### Example 1:

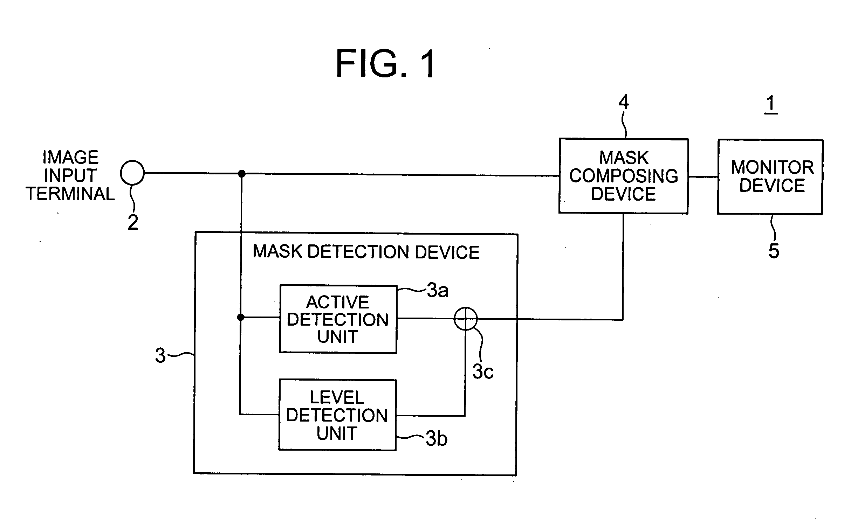

An image processing apparatus 1 including a first embodiment of an image detection device of the present invention is explained by referring to FIGS. 1-7. The image processing apparatus 1 includes an image input terminal 2, a mask detection device 3 as an image detection device, a mask composing device 4, and a monitor device 5 as shown in FIG. 1.

The mask detection device 3 includes an active detection unit 3a as a first detection unit, a level detection unit 3b as a second detection unit, and a logical addition unit 3c as a judging unit. The mask detection device 3 detects a blank area, hereafter referred to as side mask, when an image signal of an aspect ratio of 4:3 from the terminal 2 is displayed on a screen with the aspect ratio of 16:9 in broadcasting or playback.

The active detection unit 3a detects the side mask by detecting a boundary between the side mask and an image area from a change of level of pixel values of a scan line in the scan direction of the image. The active detection unit 3a has a boundary memory unit such as a RAM (Random Access Memory) to store a position of the boundary by a prescribed amount of fields . The level detector unit 3b sets judge areas in the side mask and the image area of the aspect ratio of 16: 9 and detects the side mask by judging whether or not the respective judge areas move for a prescribed period of time or are quiescent. The level detection unit 3b also includes a RAM (not shown) as a level memory unit to store each mean luminance level of the respective areas of the prescribed period of time in order to judge whether or not the each judge area is a moving image or a still image. The logical addition unit 3c achieves a logical addition of results of the active detection unit 3a and the level detection unit 3b, and outputs to the mask composing device 4. When either the active detection unit 3a or the level detection unit 3b detects the side mask, the mask detection device 3 outputs the judgement of the side mask to the mask composing device 4.

The mask composing device 4 as a composing device composes a side mask of a uniform pattern with at least a certain luminance level, for example a gray side mask, based on the image from the image input terminal 2 to reduce the burn-in or suppress a noticeable appearance, and outputs the composed image to the monitor device 5.

The monitor device 5 displays the image outputted from the mask composing device 4 with CRT (Cathode Ray Tube), PDP (Plasma Display Panel), and the like.

It is explained how the mask detection device 3 detects the image having the image area and the side mask.

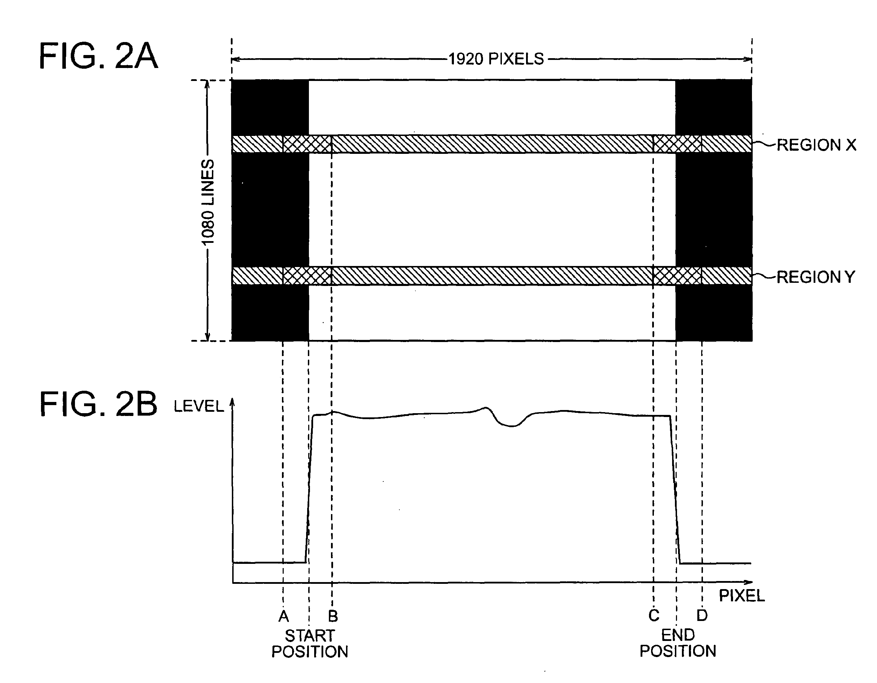

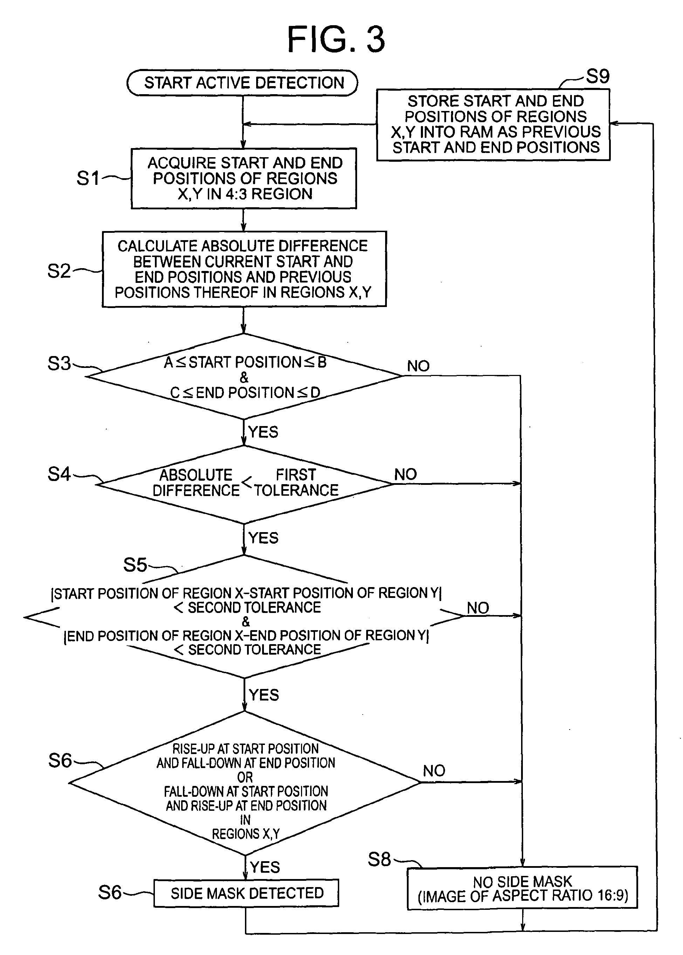

An operation of the active detection unit 3a is explained by referring to FIGS. 2-5. FIG. 2A shows the image outputted from the image input terminal 2. The image of the aspect ratio of 4:3 is aired or replayed with a playback apparatus of the aspect ratio of 16:9 and inputted to the image input terminal 2. The image of FIG. 2A has 1920 pixels in a horizontal direction and 1080 lines in a vertical direction. The image includes the image area of the aspect ratio of 4:3 at a middle portion of the screen and blank areas or black side masks at both sides of the image area. FIG. 2B illustrates a change of a luminance level of a certain scan line of FIG. 2A. FIG. 2B shows the change of at least a prescribed value of the luminance levels between the side masks and the image area. The side masks are thus detected by detecting the change of the luminance level between a region X having at least one scan line previously set and a region Y having at least one scan line and spaced from the region X. A flowchart of detecting the side masks is illustrated in FIG. 3.

At step S1, start and end positions in the horizontal direction of the image area of the regions X and Y in FIG. 2A are acquired. The start and end positions of the image area are expressed by coordinates of the scan line where the coordinate of the left end of the scan line is 1 and that of the right end of the scan line is 1920 for 1920 pixels of one scan line. Each start position is the coordinate where the luminance level changes at least a prescribed value. Each end position is also determined with the same manner. The start and end positions define the coordinates of the boundaries of the image area and the side masks. The prescribed value means a detectable difference between the luminance level of the side masks and the image area.

At step S2, the coordinates of the start and end positions of the regions X and Y acquired at step S1 each are compared with a previous coordinate thereof stored in the RAM and each absolute difference between the respective both coordinates is calculated. The previous coordinates of the start and end positions of the regions X and Y are the coordinates stored at step S9 prior to starting step S1 of the flowchart.

At step S3, it is judged whether or not the start positions of the regions X and Y acquired at step S1 are located between previously set coordinates A and B, and the end positions thereof are located between previously set coordinates C and D. If the judgement is YES, the processing goes to step S4, otherwise (NO) goes to step S8. The coordinates A and B, C and D define ranges where the boundaries between the side masks and the image area are positioned when the image of the aspect ratio of 4:3 is displayed on the screen of the aspect ratio of 16:9. The judgement of the detected start and end positions is made based on the boundaries between the image area and the side masks instead of a change in the image.

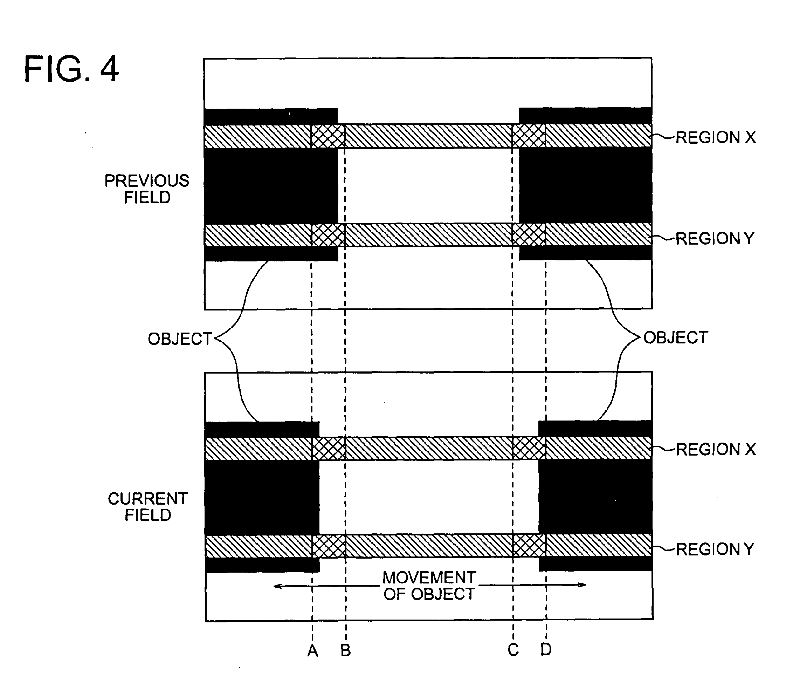

At step S4, it is judged whether or not the absolute difference calculated at step S2 is less than a previously set first tolerance. If the absolute difference is less than the first tolerance (YES), the processing goes to step S5, otherwise (NO) goes to step S8. This step judges whether or not the start and end positions are almost remained in a time axis direction (between fields). It is judged whether or not the difference between the boundaries detected currently and previously is less than the previously set first tolerance. This prevents an object of the image area, which moves as shown in FIG. 4 between the current field and the previous field, from being detected as the side masks so that the side masks are more accurately judged. The first tolerance has a certain width, because the boundary between the side masks and the image area shifts by a few pixels depending on broadcasting stations or contents replayed. The first tolerance can be individually set to the start position and the end position.

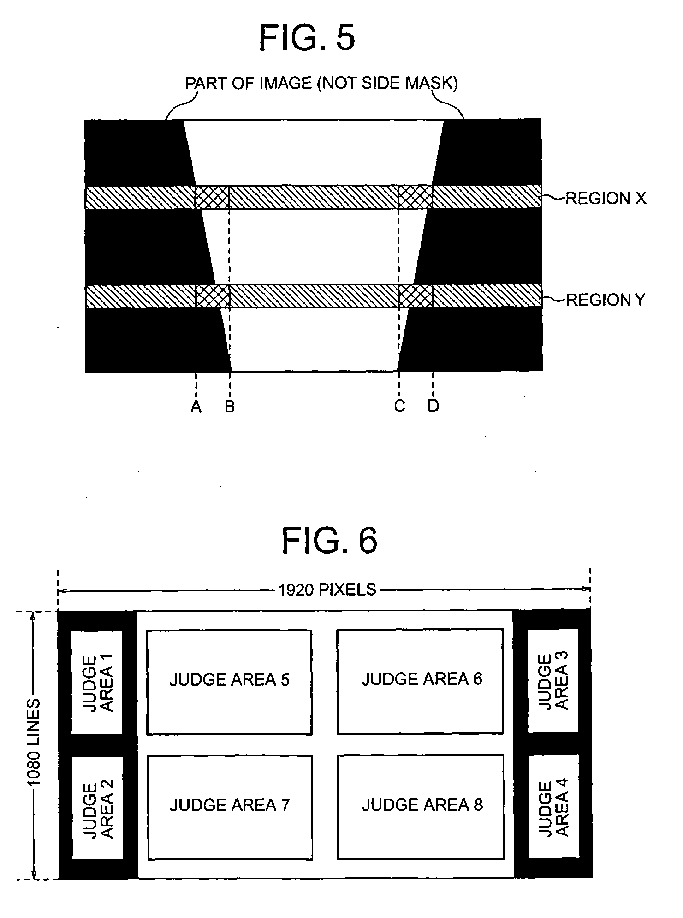

At step S5, it is judged whether or not absolute values, |start position of region X - start position of region Y| and | end position of region X - end position of region Y| , are less than a prescribed set second tolerance. If the absolute values are less than the second tolerance (YES), the processing goes to step S6, otherwise (NO) goes to step S8. This step judges whether or not the start and end positions of the regions X and Y almost same. This step prevents an image, which vertically passes between the coordinates A and B and the coordinates between C and D as shown in FIG. 5, from being detected as the side masks so that the side masks are more accurately judged without error detection. The second tolerance has a certain width to allow an error of a few pixels caused by noise. The second tolerance can be individually set to the start position and end position. The plurality of the previously set scan lines to detect the boundaries are spaced to each other for making the judgement more effective.

At step S6, it is judged whether or not the start and end positions of the regions X and Y acquired at step S1 are rise-up and fall-down, respectively, or the fall-down and the rise-up, respectively. The rise-up and fall-down are defined as the state that the luminance level of the late position is higher than that of the previous position, and the luminance level of the late position is lower than that of the previous position. If the judgement is YES, the processing goes to step S7, otherwise (NO) goes to step S8. This step judges whether the rise-up and fall-down are paired at the start and end positions at the regions X and Y.

At step S7, the detected result of the side masks is outputted to the logical addition unit 3c and the processing goes to step S9.

When the side masks are not detected at step S6, the result (no side masks, that is the image of the aspect ratio of 16:9) is outputted to the logical addition unit 3c.

At step S9, the start and end positions of the regions X and Y are stored in the RAM as the previous data and the processing goes to step S1.

The detection of the side masks is achieved by detecting the boundaries of the image area and the side masks with the change of the luminance level of one scan line and also the plurality of the scan lines. When the difference of the luminance between the each side mask and the image area is at least the prescribed value, the side mask other than black color can be detected with the active detection unit 3a.

The regions X and Y are preferably set in the positions close to the center of the screen to some extent in place of the upper and lower ends of the screen, respectively so as to avoid the error detection caused by a time display or closed-caption on the air.

In the above embodiment, the detection of the boundary of the image area and the side mask is carried out by the absolute difference every field. When the input image is a progressive type, the difference of the boundary between the image area and the side mask is achieved with a frame unit.

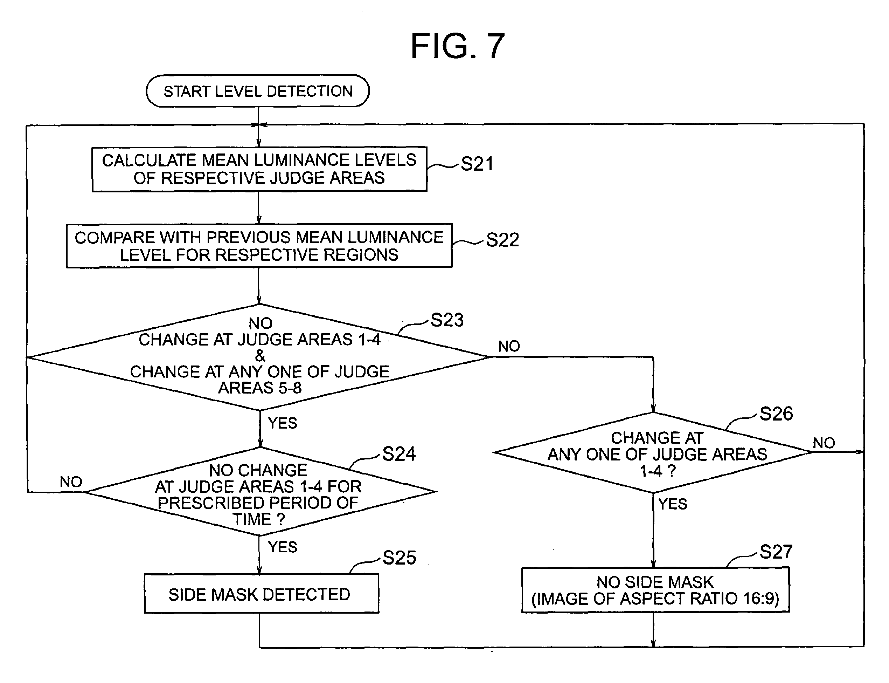

An operation of the level detection unit 3b is explained by referring to FIGS. 6 and 7. FIG. 6 shows the image of the aspect ratio of 4:3, which is inputted from the image input terminal 2, on the air or replayed by the playback apparatus on the screen of the aspect ratio of 16:9. The image of FIG. 6 has 1920 pixels in the horizontal direction and 1080 lines in the vertical direction. The image includes the image area of the aspect ratio of 4:3 at the middle portion of the screen and blank areas or black side masks at the both sides of the image area. The level detection unit 3b sets eight judge areas (two side masks in the left side screen, two side masks in the right side screen, four in the image area of the aspect ratio of 4:3) to achieve the detection operation when the image of the aspect ratio of 4:3 is inputted. The level detector unit 3b detects a change of a signal level or a mean luminance level about time at the respective judge areas. When the mean luminance levels of the judge areas 1-4 in the side masks do not change and the luminance levels of the judge areas 5-8 in the image area of the aspect ratio of 4: 3 change for a prescribed period of time, the level detector unit 3b judges that the side masks are detected. The level detector unit 3b assumes the side masks to be the still image and the image area to be the moving image about time for detection. FIG. 7 shows a flowchart of the level detector unit 3b.

At step S21, each mean luminance level of the judge areas is calculated and the result is stored in the RAM.

At step S22, the each mean luminance level stored in the RAM is compared with the corresponding previous mean luminance level to detect the change therebetween for the respective judge areas.

At step S23, the level detection unit 3b judges based on step S22 whether or not the judge areas 1-4 do not change the mean luminance levels and any one of the judge areas 5-8 changes the mean luminance level. If the judgement is YES, that is, the image area is the moving image, the processing goes to step S24, otherwise (NO) goes to step S26.

At step S24, the level detection unit 3b judges whether or not the judge areas 1-4 judged at step S23 change the mean luminance levels for a prescribed period of time. If the change is not detected (YES), the side masks are the still images, the processing goes to step S25, otherwise (NO) returns to step S21.

At step S25, when the level detection unit 3b detects the side masks, the unit 3b outputs the detected result to the logical addition unit 3c and the processing returns to step S21.

At step S26, the level detection unit 3b judges whether or not any one of the judge areas 1-4 changes the mean luminance level. If the change is observed (YES), the processing goes to step S27, otherwise (NO) returns to step S21.

At step S27, the level detection unit 3b outputs the detected result, that is, the side masks are not detected, or the image has the aspect ratio of 16:9, to the logical addition unit 3c.

The level detection unit 3b sets the plurality of the judge areas in the side masks and the image area of the image and detects the no change of the mean luminance levels of the side masks for the prescribed period of time and the change of that of the image area to detect the side masks. The level detection unit 3b detects the change of the mean luminance level with respect to the time to judge whether the side masks and the image area are the still image or the moving image. The side masks other than black color are accordingly detected.

The level detection unit 3b divides the judge area into the plurality of the judge areas in the side masks and image area so that the change of the luminance level of a small area, for example movement or change of a small object, can be detected. The judgement based on the plurality of the judged results improves the accuracy of the detection.

According to the embodiment of the present invention, the active detection unit 3a detects the boundaries between the side masks and the image area with the change of luminance level of the scan line. The level detection unit 3b sets the plurality of the judge areas in the side masks and the image area of the image. The level detection unit 3b detects whether or not the judge areas of the side masks change the mean luminance levels for the prescribed period of the time and the judge areas of the image area change the luminance level to detect the side masks. The logical addition of the active detection unit 3a and the level detection unit 3b is outputted to the mask composing device 4 so that the side masks are detected with either detection units 3a and 3b. The image having the side masks other than black color is accurately detected. The mask composing device 4 composes the side mask having a less burn-in or less noticeable appearance. The image outputted from the mask composing device 4 is displayed on the screen with less burn-in.

A number of the judge areas is not limited to eight as shown in FIG. 6. It is necessary to set the judge area not to cover both the image area and the side mask. It is essential to assuredly set the judge areas in the image area and the side masks and not necessary to entirely cover the image area and the side masks.

### Example 2:

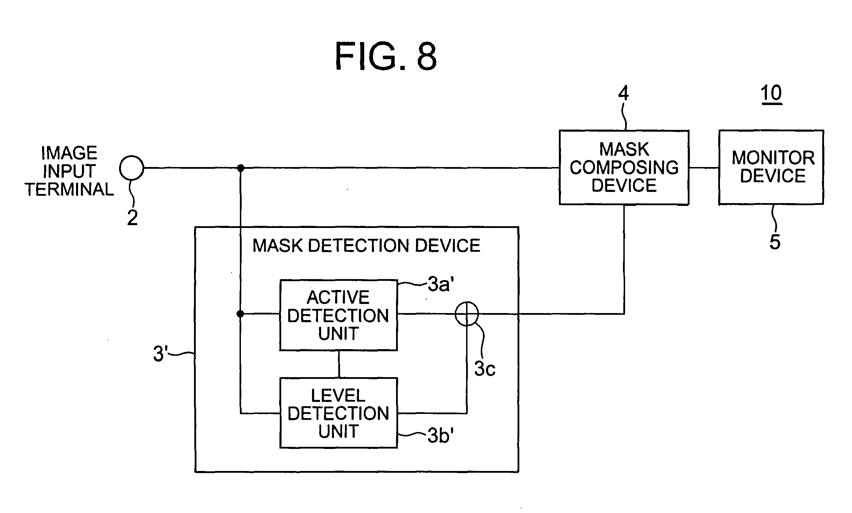

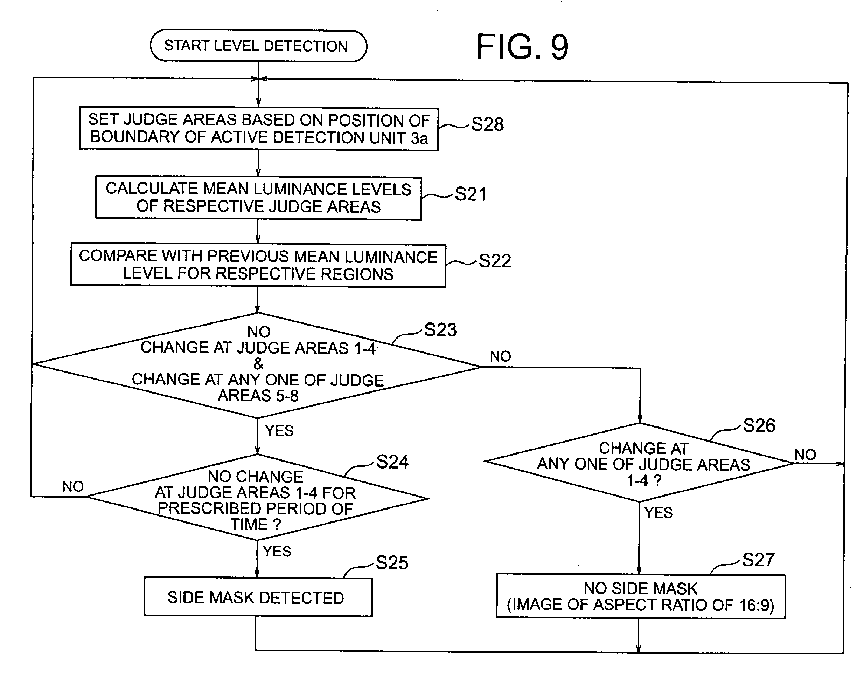

A second embodiment of an image processing apparatus 10 is explained by referring to FIGS. 8 and 9. In FIG. 2, The same portions are referred to the same reference signs as the first embodiment.

Referring to FIG. 8, a difference of the apparatus from the first embodiment is that an active detection unit 3a' (a first detection unit) is connected with a level detection unit 3b' (a second detection unit) in a image detection device, or a mask detection device 3'. In the second embodiment, the positions of the boundaries between the side masks and the image area detected by the active detection unit 3a' are taken into consideration for setting of the judge areas of the level detection unit 3b' to improve the accuracy of the level detection.

FIG. 9 shows a flowchart of the level detection unit 3b'. The flowchart of FIG. 9 has an additional step S28 prior to step S21. At step S28, the level detection unit 3b' sets the judge areas based on the positions of the boundaries between the side masks and the image area acquired with the active detection unit 3a'. When the image processing apparatus 10 is initiated or the active detection unit 3a' does not detect the positions of the boundaries, the level detection unit 3b' executes the following steps with the previously set default judge areas.

The active detection unit 3a' detects the side masks by detecting the boundaries between the side masks and the image area with the changes of the luminance levels of the scan line. The level detection unit 3b' sets the plurality of the judge areas in the side masks and the image area. The level detection unit 3b' detects the side masks by detecting whether or not the mean luminance levels of the side masks change and the mean luminance level of the image area changes for a prescribed period of time. The mask detection device 3' outputs a logical addition of the results of the active detection unit 3a' and level detection unit 3b' to the mask composing device 4. The side masks are accordingly detected by either unit 3a' or 3b' so that the side masks other than black color can also be accurately detected. The mask composing device 4 composes the side mask with less burn-in or less noticeable appearance so that the image outputted from the mask composing device 4 provides the less burn-in image to the monitor device 5. The level detection unit 3b' acquires the information about the positions of the boundaries between the side masks and the image area so that the judge areas can be set close to the boundaries between the side masks and the image area, resulting to the high detection accuracy.

### Example 3:

An image processing program according to a third embodiment of the present invention is explained. In this embodiment, the same portions are referred to the same reference signs as the first embodiment.

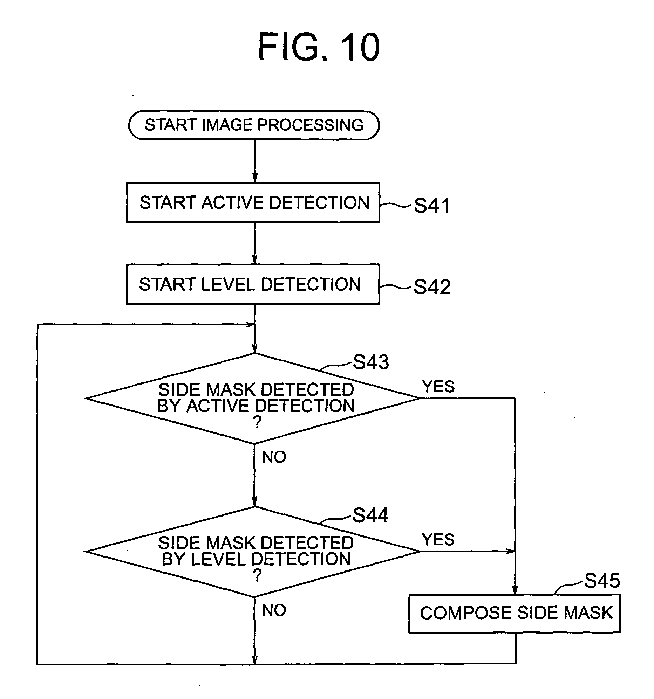

The first embodiment is configured with the hardware. The third embodiment constitutes the program executed by the computer. FIG. 10 shows the flowchart.

In this embodiment, the mask detection device 3 or 3' (image detection device) and the mask composing device 4 of FIGS. 1 and 8 are replaced with a CPU (Central Processing Unit), not shown, having the program. The flowchart of the active detection unit 3a or the level detection unit 3b is same as the first and second embodiments. FIG. 10 shows the flowchart of the image processing program for the image detection. The CPU includes a ROM (Read Only Memory) storing the image processing program and a RAM utilized for a temporal memory.

At step S41 (a first detection program), the CPU starts an active detection and executes the program of the flowchart of FIG. 3.

At step S42 (a second detection program), the CPU starts a level detection and executes the program of the flowchart of FIG. 7 or 9.

At step S43 (a first judge program), the CPU judges whether or not the side masks are detected by the active detection. If the side masks are detected (YES), the processing goes to step S45, otherwise (NO) goes to step S44.

At step S44 (a second judge program), the CPU judges whether or not the side masks are detected by the level detection. If the side masks are detected (YES), the processing goes to step S45, otherwise (NO) returns to step S43.

At step S45 (composing program, or burn-in reducing process), the CPU composes the side mask such as a gray side mask having a uniform pattern with a certain luminance level to reduce the burn-in or the noticeable appearance for the inputted image.

The active detection unit detects the side masks by detecting the boundaries between the side masks and the image area with the changes of the luminance levels. The level detection unit sets the plurality of the judge areas in the side masks and the image area of the image. The level detection unit detects the side masks by detecting whether or not the judge areas in the side masks change the mean luminance levels for the prescribed period of time, or the judge areas in the image area change the mean luminance values for the prescribed period of time. Either of the active and level detection units detects the side masks so that the side masks other than black color can be accurately detected. The mask composing device composes the side mask which reduces the burn-in in the display device displaying the outputted image. The computer program executes the processing in place of the associated hardware and provides a versatility.

The logical addition unit 3c is utilized for the judging unit but a logical product can be utilized. When either of the active and level detection units detects the side masks, the mask detection device judges the presence of the side masks. The detection of the side masks can be judged by the detection of both the active and level detection units. The different detection units reduce the error detection of the side masks.

The mask composing device, or the composing device, composes the less burn-in or less noticeable appearance side masks. The image of the aspect ratio of 4:3 can be expanded to the image of the aspect ratio of 16: 9 (auto-wide function), or the boundary between the side masks and the image area can be made less sharp. The auto-wide function expands the image area to the side masks to avoid the same image displayed for a long time. The less sharpness function is to reduce the difference of the luminance between the side masks and the image area. Both functions make the burn-in of the monitor 5 less appearance or less visible to users.

The above embodiments can also be adapted to upper and lower blank areas besides the left and right blank areas. For the upper and lower blank areas, the active detection unit detects the boundary with the change of the luminance level of the pixels of the prescribed coordinate in the vertical direction. The level detection unit changes the judge areas and operates similarly.

The image processing apparatus of the present invention is also adapted other display or apparatus having the display device, for example, a monitor display (display device without television tuner), television tuner, and DVD (Digital Versatile Disk) player/recorder as well as the CRT or PDP of the television receiver.

The embodiments described above provide the image detection device, the image detection method, the method of reducing the burn-in of the display device, and the image detection program.

### Appendix 1:

A mask detection device 3 for detecting a side mask of an inputted image having an image area of an aspect ratio of 4:3 and the side mask, includes: an active detection unit 3a for detecting the side mask based on a change of a luminance level of a scan line of the image; a level detection unit 3b for previously setting a plurality of judges areas in the image and detecting the side mask based on a judgment whether or not the respective judge areas are a moving image or still image with changes of the mean luminance levels of the judge areas; and a logical addition unit 3c for judging whether or not the side mask is detected based on detected results of the active detection unit 3a and the level detection unit 3b.

The mask detection device 3 judges the side mask with the combination of the detected results of the active detection unit 3a and the level detection unit 3b so that the side mask other than black color of the various images can be accurately detected.

### Appendix 2:

A method of detecting a side mask of an inputted image having an image area of an aspect ratio of 4: 3 and the side mask, includes the steps of: detecting the side mask based on a change of a luminance level in a scan line of the image; setting previously a plurality of judge areas and detecting the side mask based on a judgment whether or not the respective judge areas are a moving image or still image with changes of the mean luminance levels of the judge areas; and judging whether or not the side mask is detected based on the detected results of both the change of the luminance level of the scan line and the changes of the mean luminance levels of the judge areas for a prescribed period of time.

The mask detection device 3 judges the side mask with the combination of the detected results of the two different detection methods so that the side mask other than black color of the various images can be accurately detected.

### Appendix 3:

A method of reducing a burn-in of a monitor 5 displaying an image having a side mask and an image area of an aspect ratio of 4: 3 in respective prescribed regions, includes the steps of: judging the image positioned in the side mask to be the side mask when a difference between a luminance level of the image positioned in the side mask and the image positioned in the image area of the aspect ratio of 4:3 is at least a prescribed value, the image positioned in the side mask is a still image, and the image positioned in the image area of the aspect ratio of 4:3 is a moving image; and providing the inputted image with a process of composing a gray side mask based on the judgment.

The method of reducing the burn-in composes the gray side mask based on the combination of the detected results of the two different detection methods so that the composition of the gray side mask becomes more accurate.

### Appendix 4:

An image detection program achieved by a computer for detecting a side mask of an inputted image having an image area of an aspect ratio of 4 : 3 and the side mask, includes the programs of: step S41 for detecting the side mask based on a change of a luminance level in a scan line of the image; step S42 for setting previously a plurality of judge areas and detecting the side mask based on a judgment whether or not the respective judge areas are a moving image or still image with changes of mean luminance levels of the judge areas; and steps S43 and S44 for judging whether or not the side mask is detected based on detected results of steps S41 and S42.

The image detection program judges the side mask with the combination of the detected results of steps S41 and S42 so that the side masks other than black color of the various images can be accurately detected.

The embodiments of the present invention are only exemplary and not limited thereto. Any modification and alteration are within the scope of the present invention.

## Claims

1. An image detection device for detecting a blank area of an inputted image having an image area and the blank area positioned outside the image area, comprising:
a first detection unit for detecting the blank area based on a change of a luminance level of an arbitrary scan direction of the image;
a second detection unit for previously setting a plurality of judges areas in the image and detecting the blank area based on a judgment whether or not the respective judge areas are moving images or still images; and
a judging unit for judging whether or not the blank area is detected based on detected results of the first detection unit and the second detection unit.

2. The image detection device as claimed in claim 1, wherein the first detection unit detects the blank area by detecting a boundary between the image area and the blank area, the boundary being defined by a pixel where the luminance levels of a plurality of lines in the arbitrary scan direction change by at least a prescribed value previously set.

3. The image detection device as claimed in claim 2, wherein the first detection unit has a boundary memory unit for storing a position of the previously detected boundary and detects the blank area when a difference between the position of the previously detected boundary and the position of a currently detected boundary is less than a first tolerance previously set.

4. The image detection device as claimed in claim 2, wherein the first detection unit previously sets the plurality of the lines separated to each other for detecting the boundary.

5. The image detection device as claimed in claim 1, wherein the second detection unit has a signal level memory unit for storing signal levels of the plurality of judge areas previously set for a prescribed period of time and detects the blank area when the signal levels of the plurality of the previously set judge areas of the blank area do not change for the prescribed period of time and the signal levels of the previously set judge areas of the image area change.

6. The image detection device as claimed in claim 1, wherein the second detection unit previously sets the plurality of the judge areas in the each blank area and the image area, respectively.

7. An image processing apparatus comprising:
the image detection device as claimed in claim 1; and
a composing device for composing the inputted image based on a detected result of the image detection device.

8. A method of detecting a blank area of an inputted image having an image area and the blank area positioned outside the image area, comprising the steps of:
detecting the blank area based on a change of a luminance level in an arbitrary scan direction of the image;
setting previously a plurality of judge areas and detecting the blank area based on a judgment whether or not the respective judge areas are moving images or still images; and
judging whether or not the blank area is detected based on the detected results of both the change of the luminance level of the scan direction and the judgment of the respective judge areas being the moving images or still images.

9. A method of reducing a burn-in of a display device displaying an image having a blank area and an image area in respective prescribed regions, comprising the steps of:
judging the image positioned in the blank area as the blank area when
a difference between a luminance level of the image positioned in the blank area and the image positioned in the image area is at least a prescribed value,
the image positioned in the blank area is a still image, and
the image positioned in the image area is a moving image; and
providing the inputted image with a process of reducing the burn-in based on the judgment.

10. An image detection program achieved by a computer for detecting a blank area of an inputted image having an image area and the blank area positioned outside the image area, comprising the programs of:
a first detection program for detecting the blank area based on a change of a luminance level in an arbitrary scan direction of the image;
a second detection program for setting previously a plurality of judge areas and detecting the blank area based on a judgment whether or not the respective judge areas are moving images or still images; and
a judge program for judging whether or not the blank area is detected based on detected results of the first detection program and the second detection program.
